# EUROPEAN PATENT SPECIFICATION

(11) **EP 2 933 530 B1**
(45) Date of publication and mention of the grant of the patent: **23.10.2019**
(21) Application number: 15163944.0
(22) Date of filing: 17.04.2015
(51) Int. Cl.: F16H 1/22

(54) **REDUCER**
REDUKTIONSGETRIEBE
RÉDUCTEUR

(30) Priority: 18.04.2014 JP 2014086534
(43) Date of publication of application: 21.10.2015
(73) Proprietor: Nabtesco Corporation, Tokyo (JP)
(72) Inventor: Komori, Hirofumi, Gifu (JP)
(74) Representative: Grünecker Patent- und Rechtsanwälte PartG mbB

(56) References cited:
- EP-A1- 2 275 705
- EP-A2- 1 113 193
- GB-A- 1 299 007
- JP-A- 2006 283 983

## Description

### TECHNICAL FIELD

The present invention relates to a reducer for reducing the rotational speed of a driving gear and transmitting the reduced rotation to a driven gear **according to the preamble of claim 1.**

### BACKGROUND ART

Various attempts have been made to greatly reduce the rotational speed of a driving gear and transmit the reduced rotation to a driven gear (i.e. to increase the torque ratio of the output side to the input side). For example, patent document 1 teaches that the diameter of driven external gears can be increased without mutual interference by disposing the driven external gears at different axial positions. **The features described in the preamble of claim 1 are already known from patent document 1.**

### Prior Art Document

### Patent Document

Patent document 1: JP 2006 283 983 A

### SUMMARY OF THE INVENTION

In the case of the method disclosed in patent document 1, which involves disposing the driven external gears in different axial positions, it is necessary to increase the axial sizes of those portions of shafts to which the driven external gears are secured. This leads to an increase in the axial size of the reducer.

The present invention has been made to solve the above problem, and it is an object of the present invention to downsize such a conventional reducer while maintaining a high torque ratio.
(1) In order to achieve the object, the present invention provides a reducer comprising: a driving gear coupled to an input shaft to which a driving force is inputted; and a plurality of driven gears which are each provided or mounted integrally on each of a plurality of output shafts from which the driving force is outputted, which each have a teeth portion that engages the driving gear, and which are arranged along the circumferential direction of the input shaft, wherein the driven gears each have an inner portion located on the output shaft side, and an outer portion having, at the periphery, the teeth portion, and wherein two driven gears of the plurality of driven gears, lying adjacent to each other in the circumferential direction of the input shaft, are provided such that the inner portions at least partly overlap with each other in a direction in which the output shaft extends, that the outer portions overlap with each other when viewed in the direction in which the output shaft extends, and that they do not overlap with each other when viewed in a direction perpendicular to the direction in which the output shaft extends.
   In the reducer of the present invention, the (radially) outer portions of two adjacent driven gears which are rotationally driven by the driving gear overlap with each other when viewed in the axial direction. This can increase the diameter of each driven gear, thereby increasing the torque ratio of the output side to the input side.
   Further, in the reducer of the present invention, the inner portions of two adjacent driven gears at least partly overlap with each other in a direction in which the output shaft extends. This can shorten those portions of the output shafts to which the driven gears are mounted, thereby shortening the output shafts.
   Thus, according to the reducer of the present invention, downsizing of the device can be achieved while maintaining a high torque ratio.
(2) In a preferred embodiment of the present invention, the outer portion of one of the two adjacent driven gears is located at a position which is displaced to one side from the position of the inner portion of the driven gear in a direction in which the output shaft extends, while the outer portion of the other of the two adjacent gears is located at a position which is displaced to the other side from the position of the inner portion of the driven gear in a direction in which the output shaft extends.
   Thus, in this embodiment, the axial position of the outer portion of one of the two adjacent driven gears is displaced to one side from the position of the inner portion of the driven gear, while the axial position of the outer portion of the other driven gear is displaced to the other side from the position of the inner portion of the driven gear. This can easily avoid interference between the outer portions of the two adjacent driven gears.
(3) In a preferred embodiment of the present invention, the two adjacent driven gears have the same shape. According to this embodiment, common parts can be used as the driven gears.
(4) In a preferred embodiment of the present invention, the driven gears are each configured to make spline engagement with a splined portion formed in the output shaft; and the outer portion of one of the two adjacent driven gears at least partly overlaps, in a direction in which the output shaft extends, with an incompletely splined portion formed in the output shaft.

In this embodiment, the outer portion of one of the two adjacent driven gears at least partly overlaps, in the direction of the output shaft, with an incompletely splined portion (portion to smoothly connect the splined portion and a non-splined portion of the output shaft) formed in the output shaft. This enables the outer portion of the other of the two adjacent driven gears to be located nearer to the outer portion of the one driven gear in the axial direction, making it possible to shorten the output shaft.

According to the reducer of the present invention, downsizing of the device can be achieved while maintaining a high torque ratio.

### BRIEF DESCRIPTION OF THE DRAWINGS

FIG. 1 is a partial cross-sectional front view of an eccentric reducer according to an embodiment of the present invention, illustrating the internal structure of the eccentric reducer;
FIG. 2 is a cross-sectional view taken along the line II-II of FIG. 1, illustrating a positional relationship between an input gear and stepped gears, with depiction of certain components being omitted;
FIG. 3 is a cross-sectional view taken along the line III-III of FIG. 2;
FIG. 4 is a diagram corresponding to FIG. 1, showing the construction of a conventional known eccentric reducer;
FIG. 5 is a cross-sectional view taken along the line V-V of FIG. 4 and corresponding to FIG. 2;
FIG. 6 is a diagram corresponding to FIG. 2, illustrating a positional relationship between an input gear and driven gears in an eccentric reducer according to a variation;
FIG. 7(A) is a cross-sectional view taken along the line VIIA-VIIA of FIG. 6, FIG. 7(B) is a cross-sectional view taken along the line VIIB-VIIB of FIG. 6, and FIG. 7(C) is a cross-sectional view taken along the line VIIC-VIIC of FIG. 6; and
FIG. 8 is a diagram corresponding to FIG. 3, illustrating a positional relationship between two adjacent driven gears in an eccentric reducer according to a variation.

### DESCRIPTION OF THE PREFERRED EMBODIMENTS

Preferred embodiments of the present invention will now be described with reference to the drawings. An eccentric reducer according to an embodiment of the present invention is suitable for use in, for example, a yaw-drive device for yaw-driving a nacelle to rotate it with respect to a tower of a wind turbine, or a pitch-drive device for pitch-driving the shaft of a blade with respect to a nacelle-side hub. The eccentric reducer of this embodiment is usable not only in a wind turbine, but in a variety of industrial machines or construction machines as well.

### [Overall Construction]

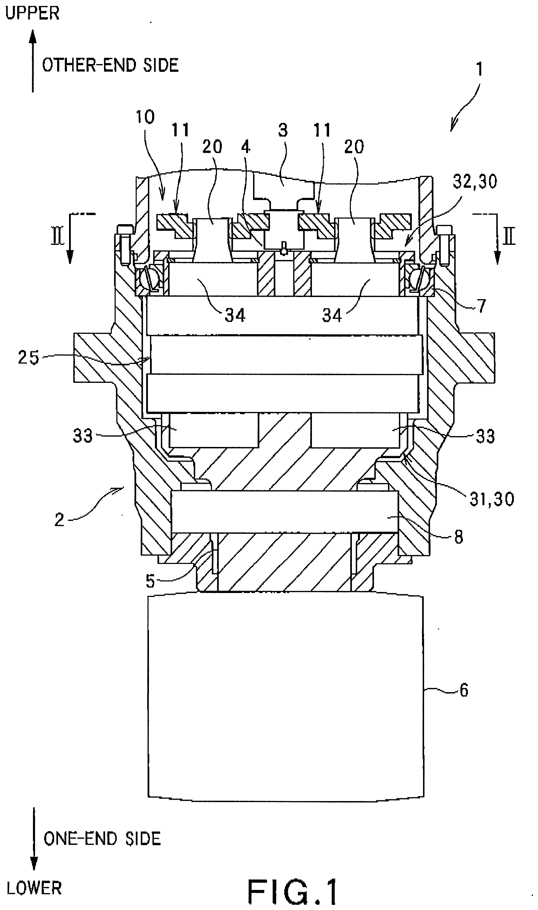

FIG. 1 is a partial cross-sectional front view of the eccentric reducer 1 of this embodiment. The eccentric reducer 1 is configured to reduce the speed of rotation inputted from a motor (not shown), and transmit and output the reduced rotation. The eccentric reducer 1 includes a case 2, in input gear 4 (driving gear), a reducing section 10, an output shaft 5, etc.

As shown in FIG. 1, at the lower one end of the eccentric reducer 1, a pinion 6 is formed integrally with the output shaft 5 which projects from the case 2, and a motor is mounted to the case 2 at the upper other end of the eccentric reducer 1. In the eccentric reducer 1, the rotation inputted from the motor is reduced by the reducing section 10, and the torque is transmitted and outputted to the pinion 6 of the output shaft 5. In the following description, the lower side or the output side of the eccentric reducer 1 shown in FIG. 1, where the output shaft 5 is disposed, may be referred to as one-end side, while the upper side or the input side of the eccentric reducer 1, where the motor is mounted, may be referred to as the other-end side. The other-end side may sometimes be referred to as the upper side or upper, while the one-end side may sometimes be referred to as the lower side or lower.

As shown in FIG. 1, the case 2 consists of a plurality of case members which are fastened to each other, and has a vertically-extending generally-cylindrical shape. The reducing section 10, etc. are housed in the case 2. Vertically-extending pin internal teeth (not shown) are arranged on the inner peripheral surface of the case 2 at regular intervals along the circumferential direction of the case 2. The pin internal teeth are configured to engage the below-described external-tooth gears 25.

The input gear 4 is comprised of a short shaft-shaped gear member and formed integrally and coaxially with the rotating shaft 3 of the motor. The rotating shaft 3 of the motor is provided as an input shaft to which the rotary driving force of the motor is inputted. A gear portion that engages the teeth portions 15a, 17a of stepped gears 11 of the reducing section 10, as will be described in more detail below, is formed in the peripheral surface of the input gear 4. The input gear 4 is configured to input the rotary driving force from the motor to the stepped gears 11.

The reducing section 10 comprises the stepped gears 11, crank shafts 20, external-tooth gears 25, a carrier 30, etc.

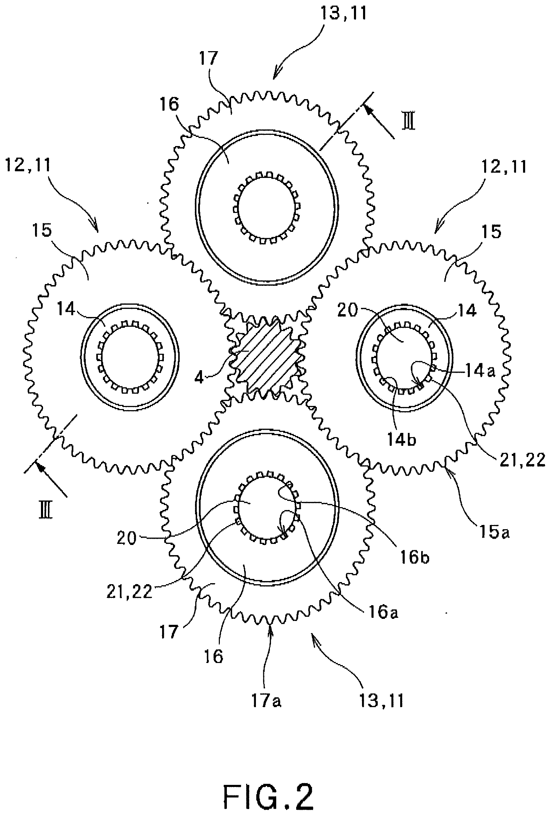

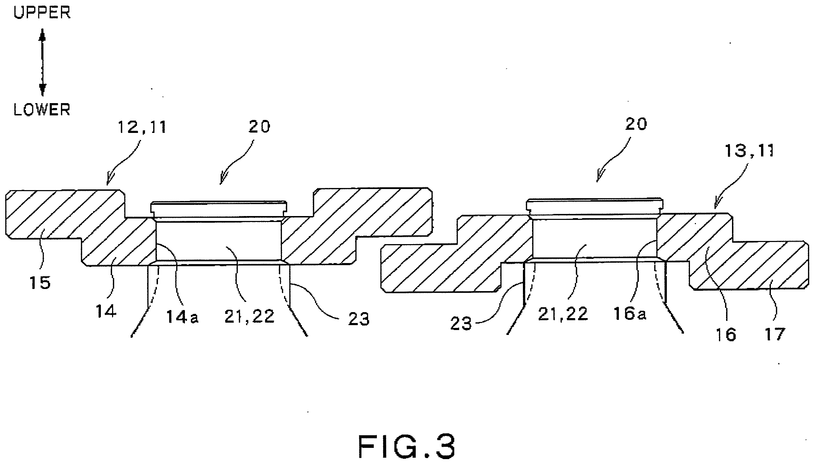

FIG. 2 is a diagram illustrating a positional relationship between the input gear 4 and the stepped gears 11, and FIG. 3 is a diagram illustrating the shape of the stepped gears 11, FIG. 2 is a cross-sectional view taken along the line II-II of FIG. 1, with depiction of certain components (case 2, etc.) being omitted. FIG. 3 is a cross-sectional view taken along the line III-III of FIG. 2.

The stepped gears 11 are provided as driven gears which are driven by the input gear 4. The stepped gears 11 each have, at the periphery of the generally disk-shaped body, a teeth portion 15a or 17a having a number of teeth whose tooth-width direction extends along the central axis of the generally disk-shaped body and which are arranged at regular intervals in the circumferential direction. As shown in FIG. 2, a plurality of (four in this embodiment) stepped gears 11 that engage the teeth portion of the input gear 4 are disposed around the input gear 4. The stepped gears 11 are arranged at regular intervals (90-degree intervals in this embodiment) along the circumferential direction of the input gear 4. In this embodiment the four stepped gears 11 consist of two first gears 12 and two second gears 13.

Each first gear 12 has an inner portion 14 and an outer portion 15 which are formed integrally. The inner portion 14 is a radially inner portion of the first gear 12, while the outer portion 15 is a radially outer portion of the first gear 12.

The inner portion 14 is a disk-shaped portion. A through-hole 14a having spline grooves 14b is formed in the center of the inner portion 14. A peripheral splined portion 21 of a crank shaft 20 fits into the through-hole 14a. Thus, the first gear 12 makes spline engagement with the crank shaft 20.

The outer portion 15 is an annular portion having approximately the same thickness as the inner portion 14 and is formed integrally with the outer periphery of the inner portion 14. The outer portion 15 has, at the periphery, the teeth portion 15a that engages the input gear 4. The outer portion 15 is located at a position displaced from the position of the inner portion 14 in the axial direction. As shown in FIG. 3, the first gear 12 is mounted to the crank shaft 20 such that the outer portion 15 is located at a higher position than the inner portion 14.

Each second gear 13 is comprised of a member having the same shape and the same size as the first gear 12. More specifically, as with the first gear 12, the second gear 13 has an inner portion 16 and an outer portion 17 which are formed integrally. The inner portion 16 is a radially inner portion of the second gear 13, while the outer portion 17 is a radially outer portion of the second gear 13.

As with the inner portion 14 of the first gear 12, the inner portion 16 is a disk-shaped portion, and a through-hole 16a having spline grooves 16b is formed in the center of the inner portion 16. A peripheral splined portion 21 of a crank shaft 20 fits into the through-hole 16a. Thus, the second gear 13 makes spline engagement with the crank shaft 20.

As with the outer portion 15 of the first gear 12, the outer portion 17 is an annular portion having approximately the same thickness as the inner portion 16 and is formed integrally with the outer periphery of the inner portion 16. The outer portion 17 has, at the periphery, the teeth portion 17a that engages the input gear 4. The outer portion 17 is located at a position displaced from the position of the inner portion 16 in the axial direction. As shown in FIG. 3, unlike the first gear 12, the second gear 13 is mounted to the crank shaft 20 such that the outer portion 17 is located at a lower position than the inner portion 16.

A plurality of (four in this embodiment) crank shafts 20 are arranged at regular intervals along the circumferential direction of the inner periphery of the case 2. Each crank shaft 20 (the outline depicted) is disposed such that it penetrates through a crank hole (not shown) formed in each of the external-tooth gears 25, and is configured as a shaft member which, when rotated, eccentrically rotates the external-tooth gears 25. Each crank shaft 20 makes a revolving movement in conjunction with the rotation of the external-tooth gears 25 caused by the rotation of the crank shaft 20.

A splined portion 21 is formed at an upper position in each crank shaft 20. The splined portion 21 is provided as a gear-mounting portion 22 to which the stepped gear 11 is mounted. The gear-mounting portion 22 has approximately the same length as the thickness of the inner portion 14, 16 of the stepped gear 22 in the vertical direction. The gear-mounting portions 22 of the crank shafts 20 are disposed in the case 2 such that they are located on the same level.

Each crank shaft 20 has an incompletely splined portion 23. The incompletely splined portion 23 is a portion to smoothly connect the lower end of the splined portion 21 and a non-splined portion of the crank shaft 20. As shown in FIG. 3, the lower portion of the outer portion 17 of the second gear 13 overlaps with the incompletely splined portion 23 in the vertical direction.

As shown in FIGS. 2 and 3, in the eccentric reducer 1 of this embodiment, the first gears 12 and the second gears 13 are arranged alternately in the circumferential direction of the input gear 4. Thus, two stepped gears 11, lying adjacent to each other in the circumferential direction of the input gear 4, consist of a first gear 12 and a second gear 13. As described above, the outer portion 15 of each first gear 12 is located at a higher position than the inner portion 14 of the first gear 12, whereas the outer portion 17 of each second gear 13 is located at a lower position than the inner portion 16 of the second gear 13. This makes it possible to dispose the stepped gears 11 in the case 2 without mutual interference between the gears, as shown in FIGS. 2 and 3.

The external-tooth gears 25 are vertically arranged parallel to each other and housed in the case 2. The crank shafts 20 are inserted into the external-tooth gears 25 at regular intervals in the circumferential direction.

External teeth (not shown) that engage the pin internal teeth are formed in the outer periphery of each external-tooth gear 25. Thus, each external-tooth gear 25 constitutes a gear having the external teeth that engage the pin internal teeth. The number of the external teeth of each external-tooth gear 25 is smaller by at least one than the number of the pin internal teeth. Accordingly, the position of engagement between the external teeth and the pin internal teeth is displaced every time each crank shaft 20 rotates 360 degrees, whereby the external-tooth gears 25 oscillate and rotate eccentrically. The external-tooth gears 25 rotatably hold the crank shafts 20 by means of external-tooth bearings (not shown).

The carrier 30 which is disposed in the case 2, comprises a base carrier 31 and an end carrier 32, and is configured to rotatably hold the one-end sides and the other-end sides of the crank shafts 20 by means of crank bearings 33, 34. The base carrier 31 and the end carrier 32 are vertically stacked and coupled to each other e.g. by bolts. The carrier 30 is held by carrier bearings 7, 8 rotatably with respect to the case 2.

The output shaft 5 is provided integrally with the end carrier 31 and extends downward from a central portion of the end carrier 31. As shown in FIG. 1, the output shaft 5, at its end with which the pinion 6 is formed integrally, projects from the case 2.

### [Operation]

The operation of the above-described eccentric reducer 1 will now be described. The eccentric reducer 1 operates by the operation of a not-shown motor. In particular, the input gear 4 starts to rotate when the operation of the motor is started. When the input gear 4 rotates, the stepped gears 11 in engagement with the input gear 4 rotate and the crank shafts 20, to which the stepped gears 11 are secured, rotate. In conjunction with the rotation of the crank shafts 20, the external-tooth gears 25 oscillate and rotate eccentrically while displacing the position of engagement with the pin internal teeth. In conjunction with the eccentric rotation of the external-tooth gears 25, the crank shafts 20, rotatably held by the external-tooth gears 25, each make a revolving movement while rotating. The revolving movement of each crank shaft 20 rotates the carrier 30 which rotatably holds the one-end side and the other-end side of each crank shaft 20 in the base carrier 31 and in the end carrier 32, respectively. The rotation of the carrier 30 rotates the output shaft 5 provided integrally with the base carrier 31, whereby a large torque is outputted from the pinion 6.

When it is intended to increase the torque ratio of the output side to the input side, a conceivable method is to increase the number of the teeth of an output gear by increasing the diameter of the gear. However, this leads to an increase in the radial size of the reducer. As described above, patent document 1 teaches that by disposing driven external gears in different axial positions, the diameter of the driven external gears can be increased while reducing an increase in the radial size of the reducer. The method of patent document 1, however, involves an increase in the axial sizes of those portions (corresponding to the gear-mounting portions 22 in this embodiment) of crank shafts to which the driven external gears are mounted. This leads to an increase in the axial size of the reducer.

In the eccentric reducer 1 of this embodiment, on the other hand, the outer portions 15, 17 of any two adjacent driven gears (a first gear 12 and a second gear 13) which are rotationally driven by the input gear 4 overlap with each other when viewed in the vertical direction. Therefore, the driven gears 12, 13 can each have an increased diameter, making it possible to ensure a high torque ratio of the output side to the input side.

Further, in the eccentric reducer 1 of this embodiment, those portions (gear-mounting portions 22) of the crank shafts 20 to which the driven gears 12, 13 are mounted overlap each other in the axial direction. The crank shafts 20 of the eccentric reducer 1 of this embodiment can therefore be shortened in the axial direction as compared to the reducer of patent document 1.

### [Advantageous Effects]

As described hereinabove, according to the eccentric reducer 1 of this embodiment, downsizing of the device can be achieved while maintaining a high torque ratio.

Further, in the eccentric reducer 1 of this embodiment, with reference to any two driven gears lying adjacent to each other in the circumferential direction of the input gear 4, the outer portion 17 of one driven gear (second gear 13) is located at a relatively lower position, while the outer portion 15 of the other driven gear (first gear 12) is located at a relatively higher position. This can easily avoid interference between the adjacent first and second gears 12, 13.

Further, in the eccentric reducer 1 of this embodiment, the first gears 12 and the second gears 13 have the same size and the same shape. Therefore, common parts can be used as the driven gears 12, 13.

Further, in the eccentric reducer 1 of this embodiment, part of the outer portion 17 of each second gear 13 overlaps with the incompletely splined portion 23 of the crank shaft 20 in a direction in which the crank shaft 20 extends. This enables the outer portion 15 of each first gear 12 to be located closer to the outer portion 17 of each second gear 13 in the axial direction. The crank shafts 20 can therefore be shortened.

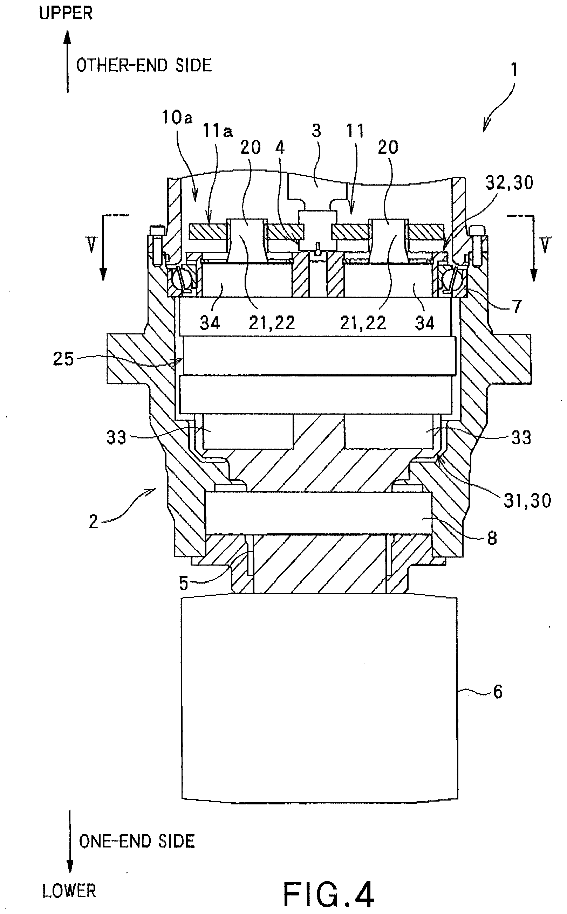

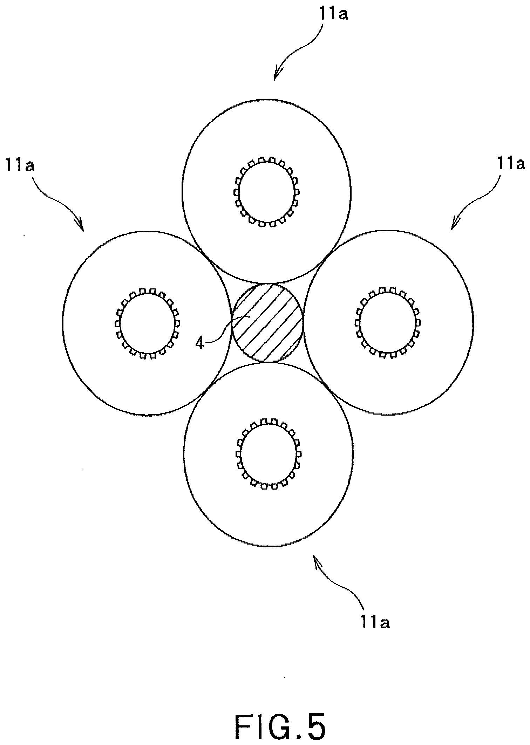

FIG. 4 is a diagram corresponding to FIG. 1, showing the construction of a conventional known eccentric reducer 1a, and FIG. 5 is a cross-sectional view taken along the line V-V of FIG. 4 and corresponding to FIG. 2. In FIG. 5, depiction of peripheral teeth portions, formed in an input gear 4 and driven gears 11a, is omitted.

In the eccentric reducer 1a shown in FIG. 4, the driven gears 11a are comprised of spur gears. Compared to the reducer disclosed in the above-described patent document 1, the splined portions 21 (gear-mounting portions 22) of crank shafts 20, to which the driven gears 11a are mounted, are relatively short in the vertical direction. Further, as shown in FIG. 5, the driven gears 11a do not overlap with each other when viewed in the vertical direction. Thus, the torque ratio of the eccentric reducer 1a is smaller than that of the eccentric reducer 1 of this embodiment.

When the eccentric reducer 1 of this embodiment (see FIG. 1) is compared to the conventional known eccentric reducer 1a (see FIG. 4), the two reducers have the same construction except for the driven gears. Accordingly, the eccentric reducer 1 of this embodiment can be constructed by replacing the driven gears 11a of the conventional known eccentric reducer 1a with the driven gears 12, 13 of this embodiment. Thus, the eccentric reducer 1 of this embodiment can be constructed by using most of the same components as used in the conventional known eccentric reducer 1a. For example, the same crank shafts as used in the conventional reducer 1a can be used also in the eccentric reducer 1 of this embodiment.

While the present invention has been described with reference to preferred embodiments, it is understood that the present invention is not limited to the embodiments described above, but is capable of various changes and modifications within the scope of the inventive concept as expressed herein. The following are exemplary modifications:

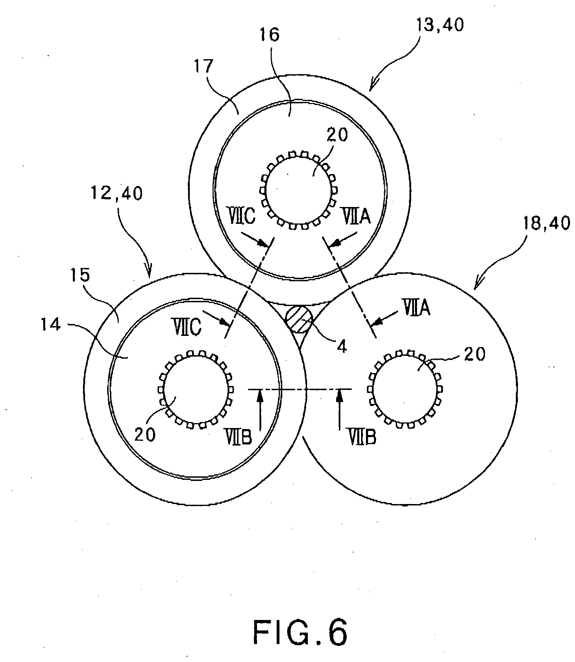

(1) FIG. 6 is a diagram corresponding to FIG. 2, illustrating a positional relationship between an input gear 4 and driven gears 40 in an eccentric reducer according to a variation. In FIG. 6, depiction of peripheral teeth portions, formed in the input gear 4 and the driven gears 40, is omitted.

Though in the above-described embodiment all the driven gears are comprised of the stepped gears 11, the present invention is not limited to this feature. In particular, the eccentric reducer of this variation has three driven gears 40. In this variation, the three driven gears 40 consist of a first gear 12 and a second gear 13, which have the same construction as the first and second gears 12, 13 of the above-described embodiment, and a spur gear 18. As shown in FIG. 6, the three driven gears 40 are arranged at regular intervals along the circumferential direction of the input gear 4. The spur gear 18 is a flat gear having the same diameter as that of the first gear 12 and that of the second gear 13.

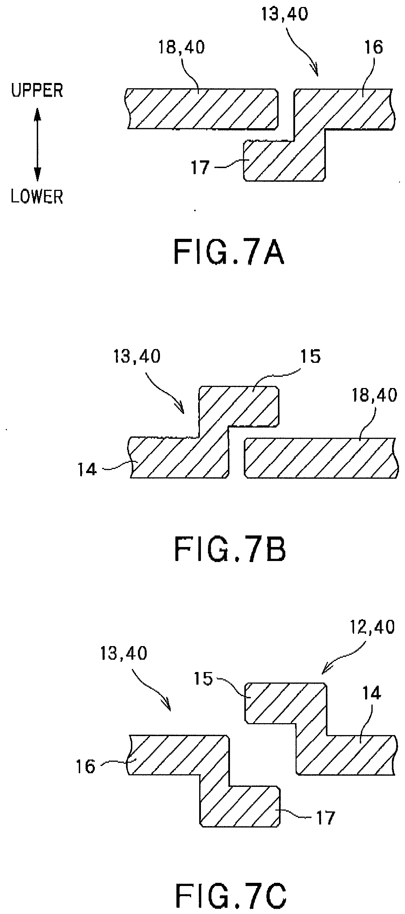

FIGS. 7(A) through 7(C) are enlarged cross-sectional views of peripheral portions of two driven gears 40 lying adjacent to each other in the circumferential direction of the input gear 4. In particular, FIG. 7(A) is a cross-sectional view taken along the line VIIA-VIIA of FIG. 6, FIG. 7(B) is a cross-sectional view taken along the line VIIB-VIIB of FIG. 6, and FIG. 7(C) is a cross-sectional view taken along the line VIIC-VIIC of FIG. 6.

As shown in FIG. 7(A), the outer portion 17 of the second gear 13 is located at a lower position than the lower surface of the spur gear 18. Accordingly, the second gear 13 and the spur gear 18 do not interfere with each other. As shown in FIG. 7(B), the outer portion 15 of the first gear 12 is located at a higher position than the upper surface of the spur gear 18. Accordingly, the first gear 12 and the spur gear 18 do not interfere with each other. Further, as shown in FIG. 7(C), the outer portion 15 of the first gear 12 is located at a higher position than the outer portion 17 of the second gear 13. Accordingly, the first gear 12 and the second gear 13 do not interfere with each other.

In the case of an eccentric reducer 1 which has an even number of driven gears as in the above-described embodiment, interference between the driven gears can be avoided by alternately disposing first gears 12 and second gears 13 as the driven gears in the circumferential direction of an input gear 4. On the other hand, in the case of an eccentric reducer which has an odd number of driven gears as in this variation, first gears 12 and second gears 13 as the driven gears cannot be disposed in a completely alternate manner in the circumferential direction of an input gear 4: some two first gears 12 or some two second gears 13 should necessarily lie adjacent to each other. The adjacent first gears 12 or the adjacent second gears 13 must interfere with each other.

Even in the case of such an eccentric reducer having an odd number of driven gears, the driven gears 40 can be disposed in a case without interference between the gears by providing a spur gear 18 in addition to a first gear(s) 12 and a second gear(s) 13 as in this variation.

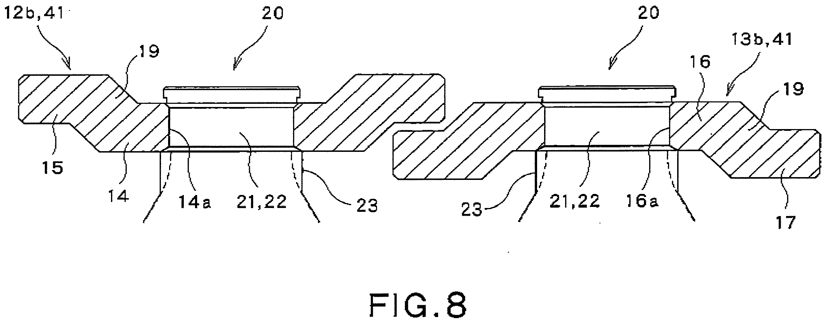

(2) FIG. 8 is a diagram corresponding to FIG. 3, illustrating a positional relationship between two adjacent driven gears in an eccentric reducer according to a variation. As shown in FIG. 8, in this variation each driven gear 41 Is provided with an inclined portion 19 that smoothly connects the inner potion and the outer portion. The inclined portion 19 can reduce a local stress generated between the inner potion and the outer portion.
(3) While the present invention has been described with reference to an eccentric reducer, the present invention is also applicable to other types of reducers, for example, a planetary reducer that uses planetary gears.

### INDUSTRIAL APPLICABILITY

The present invention can find wide application as a reducer for reducing the rotational speed of a driving gear and transmitting the reduced rotation to a driven gear.

### DESCRIPTION OF THE REFERENCE NUMERALS

- 1: eccentric reducer (reducer)
- 2: case
- 3: rotating shaft (input shaft)
- 4: input gear (driving gear)
- 5: output shaft
- 6: pinion
- 7, 8: carrier bearing
- 10: reducing section
- 11: stepped gear (driven gear)
- 11a: driven gear
- 12: first gear (driven gear)
- 13: second gear (driven gear)
- 14,16: inner portion
- 14a: through-hole
- 14b: spline groove
- 15,17: outer portion
- 15a,17a: teeth portion
- 16a: through-hole
- 16b: spline groove
- 18: spur gear (driven gear)
- 19: inclined portion
- 20: crank shaft
- 21: peripheral splined portion
- 22: gear-mounting portion
- 23: incompletely splined portion
- 25: external-tooth gear
- 30: carrier
- 31: base carrier
- 32: end carrier
- 33,34: crank bearing
- 40,41: driven gear

## Claims

1. A reducer (1) comprising:
a driving gear (4) coupled to an input shaft (3) to which a driving force is inputted; and
a plurality of driven gears (11) which are each provided or mounted integrally on each of a plurality of crank shafts (20) from which the driving force is outputted, which each have a teeth portion (15a, 17a) that engages the driving gear (4), and which are arranged along the circumferential direction of the input shaft (3),
wherein the driven gears (11) each have an inner portion (14, 16) located on the crank shaft (20) side, and an outer portion (15, 17) having, at the periphery, the teeth portion (15a, 17a), **characterized in that**
two driven gears (11) of the plurality of driven gears (11), lying adjacent to each other in the circumferential direction of the input shaft (3), are provided such that the inner portions (14, 16) at least partly overlap with each other in a direction in which the crank shaft (20) extends, that the outer portions (15, 17) overlap with each other when viewed in the direction in which the crank shaft (20) extends, and that they do not overlap with each other when viewed in a direction perpendicular to the direction in which the crank shaft (20) extends.

2. The reducer (1) according to claim 1, wherein the outer portion (17) of one of the two adjacent driven gears (11) is located at a position which is displaced to one side from the position of the inner portion (15) of the driven gear (11) in a direction in which the crank shaft (20) extends, while the outer portion (15) of the other of the two adjacent gears (11) is located at a position which is displaced to the other side from the position of the inner portion (14) of the driven gear (11) in a direction in which the crank shaft (20) extends.

3. The reducer (1) according to claim 2, wherein the two adjacent driven gears (11) have the same shape.

4. The reducer (1) according to any one of claims 1 to 3, wherein the driven gears (11) are each configured to make spline engagement with a splined portion (21) formed in the crank shaft (20), and wherein the outer portion (17) of one of the two adjacent driven gears (11) at least partly overlaps, in a direction in which the crank shaft (20) extends, with an incompletely splined portion (23) formed in the crank shaft (20).

## Patentansprüche

1. Reduktionsgetriebe (1), mit:
einem antreibenden Zahnrad (4), das mit einer Eingangswelle (3) gekoppelt ist, auf die eine Antriebskraft übertragen wird; und
mehreren angetriebenen Zahnrädern (11), die jeweils integral auf jeder von mehreren Kurbelwellen (20) vorgesehen oder daran befestigt sind, die die Antriebskraft ausgeben, wobei jedes einen Zahnbereich (15a, 17a) hat, der mit dem antreibenden Zahnrad (4) im Eingriff ist und entlang der Umfangsrichtung der Eingangswelle (3) angeordnet ist,
wobei die angetriebenen Zahnräder (11) jeweils einen Innenbereich (14, 16), der auf Seite der Kurbelwelle (20) liegt, und einen Außenbereich (15, 17) hat, der am Rand den Zahnbereich (15a, 17a) aufweist,
**dadurch gekennzeichnet, dass**
zwei angetriebene Zahnräder (11) der mehreren Zahnräder (1), die in der Umfangsrichtung der Eingangswelle (3) benachbart zueinander sind, so vorgesehen sind, dass die Innenbereiche (14, 16) zumindest teilweise in einer Richtung einander überlappen, in der sich die Kurbelwelle (20) erstreckt,
die Außenbereiche (15, 17) einander überlappen, wenn die Betrachtung in der Richtung erfolgt, in der sich die Kurbelwelle (20) erstreckt, und
sie einander nicht überlappen, wenn die Betrachtung in einer Richtung erfolgt, die senkrecht zu der Richtung ist, in der sich die Kurbelwelle (20) erstreckt.

2. Reduktionsgetriebe (1) nach Anspruch 1, wobei der Außenbereich (17) eines der beiden benachbarten angetriebenen Zahnräder (11) an einer Position liegt, die zu einer Seite hin ausgehend von der Position des Innenbereichs (15) des angetriebenen Zahnrads (11) in einer Richtung verschoben ist, in der sich die Kurbelwelle (20) erstreckt, während der Außenbereich (15) des anderen der beiden benachbarten Zahnräder (11) an einer Position liegt, die zu der anderen Seite hin ausgehend von der Position des Innenbereichs (14) des angetriebenen Zahnrads (11) in einer Richtung verschoben ist, in der sich die Kurbelwelle (20) erstreckt.

3. Reduktionsgetriebe (1) nach Anspruch 2, wobei die zwei benachbarten angetriebenen Zahnräder (11) die gleiche Form haben.

4. Reduktionsgetriebe (1) nach einem der Ansprüche 1 bis 3, wobei die angeriebenen Zahnräder (11) jeweils ausgebildet sind, eine Keilverzahnung mit einem Keilbereich (21), der in der Kurbelwelle (20) ausgebildet ist, zu bilden, und wobei der Außenbereich (17) eines der beiden benachbarten angetriebenen Zahnräder (11) zumindest teilweise in einer Richtung, in der sich die Kurbelwelle (20) erstreckt, mit einem unvollständig gekeilten Bereich (23) überlappt, der in der Kurbelwelle (20) ausgebildet ist.

## Revendications

1. Réducteur (1) comprenant:
un engrenage d'entraînement (4) couplé à un arbre d'entrée (3) auquel une force d'entraînement est appliquée; et
une pluralité d'engrenages entraînés (11) qui sont chacun prévus ou montés d'un seul tenant sur chacun d'une pluralité de vilebrequins (20) à partir desquels la force motrice est délivrée, qui présentent chacun une partie dentée (15a, 17a) qui engage le mécanisme d'entraînement (4), et qui sont disposés dans la direction périphérique de l'axe d'entrée (3),
dans laquelle les engrenages entraînés (11) ont chacun une partie intérieure (14, 16) située sur le côté du vilebrequin (20), et une partie extérieure (15, 17) ayant, à la périphérie, la partie dents (15a, 17a),
**caractérisé en ce que**
deux engrenages entraînés (11) de la pluralité d'engrenages entraînés (11), adjacents l'un à l'autre dans la direction circonférentielle de l'arbre d'entrée (3), sont prévus de sorte que les parties intérieures (14,16) se chevauchent au moins partiellement dans une direction dans laquelle le vilebrequin (20) s'étend,
**en ce que** les parties extérieures (15, 17) se chevauchent l'une l'autre lorsqu'elles sont vues dans la direction dans laquelle le vilebrequin (20) s'étend, et **en ce qu'**elles ne se chevauchent pas lorsqu'elles sont vues dans une direction perpendiculaire à la direction dans laquelle le vilebrequin (20) s'étend.

2. Réducteur (1) selon la revendication 1, dans lequel la partie extérieure (17) de l'un des deux engrenages entraînés adjacents (11) est située dans une position qui est déplacée d'un côté de la position de la partie intérieure (15) de l'engrenage entraîné (11) dans une direction dans laquelle la manivelle (20) est en extension, tandis que la partie extérieure (15) de l'autre engrenage adjacent (11) est située dans une position qui est déplacée de l'autre côté de la position de la partie intérieure (14) de l'engrenage entraîné (11) dans une direction dans laquelle la manivelle (20) s'étend.

3. Réducteur (1) selon la revendication 2, dans lequel les deux engrenages entraînés adjacents (11) ont la même forme.

4. Réducteur (1) selon l'une quelconque des revendications 1 à 3, dans lequel les engrenages entraînés (11) sont chacun configurés pour venir en prise avec une partie cannelée (21) formée dans le vilebrequin (20),
et dans laquelle la partie extérieure (17) de l'un des deux engrenages entraînés adjacents (11) se chevauche au moins partiellement, dans une direction dans laquelle le vilebrequin (20) s'étend, avec une partie cannelée incomplètement (23) formée dans le vilebrequin (20).
